# EUROPÄISCHE PATENTSCHRIFT

(11) **EP 3 419 861 B1**
(45) Veröffentlichungstag und Bekanntmachung des Hinweises auf die Patenterteilung: **18.12.2019**
(21) Anmeldenummer: 17703996.3
(22) Anmeldetag: 09.02.2017
(51) Int. Cl.: B60R 9/10, B60R 9/06

(54) **BEFESTIGUNGSVORRICHTUNG FÜR EINEN LASTENTRÄGER**
FASTENING DEVICE FOR A LOAD CARRIER
DISPOSITIF DE FIXATION POUR PORTE-CHARGE

(30) Priorität: 24.02.2016 DE 102016103291; 29.02.2016 DE 102016103595
(43) Veröffentlichungstag der Anmeldung: 02.01.2019
(73) Patentinhaber: WESTFALIA - Automotive GmbH, 33378 Rheda-Wiedenbrück (DE)
(72) Erfinder: CAKICI, Hakan, 33332 Gütersloh (DE)
(74) Vertreter: Patentanwälte Bregenzer und Reule Partnerschaftsgesellschaft mbB
(86) Internationale Anmeldenummer: PCT/EP2017/052819
(87) Internationale Veröffentlichungsnummer: WO 2017/144280

(56) Entgegenhaltungen:
- EP-A2- 2 730 464
- EP-B1- 2 014 510
- DE-A1-102010 015 652
- US-B1- 6 431 423

## Beschreibung

Die Erfindung betrifft eine Befestigungsvorrichtung zur Befestigung einer Last an einem Lastenträger eines Kraftfahrzeugs, wobei die Befestigungsvorrichtung zum Umschlingen der Last ein zumindest abschnittsweise biegeflexibles Halteorgan mit einer Zahnreihe und eine Halteeinrichtung zum zugfesten Halten des Halteorgans bezüglich einer Vorschubachse aufweist, wobei an einer Haltebasis der Halteeinrichtung ein Riegelelement anhand eines Riegelelement-Lagers zwischen einer Verriegelungsstellung und einer Entriegelungsstellung beweglich gelagert ist, wobei das Riegelelement in der Verriegelungsstellung zum Verriegeln des Halteorgans bezüglich der Halteeinrichtung mit einer Formschlusskontur formschlüssig in die Zahnreihe eingreift und in der Entriegelungsstellung außer Eingriff mit der Zahnreihe ist, wobei in der Entriegelungsstellung das Halteorgan bezüglich der Halteeinrichtung entlang der Verschiebeachse verschieblich ist.

Eine derartige Befestigungseinrichtung ist beispielsweise in US 6,431,423 B1 erläutert. Eine in EP 2 014 510 B1 erläuterte Befestigungseinrichtung ist an einem Grundgestell eines Hecklastenträgers angeordnet und dient zur Verspannung eines Rades eines Fahrrads relativ zu einer Trägerrinne, die an dem Grundgestell des Hecklastenträgers schwenkbar gelagert ist.

Ausgehend davon ist es die Aufgabe der vorliegenden Erfindung, eine besser handhabbare Befestigungsvorrichtung bereitzustellen.

Zur Lösung der Aufgabe ist bei einer Befestigungsvorrichtung der eingangs genannten Art vorgesehen, dass sie zum Vorschieben des Halteorgans entlang der Verschiebeachse ein an der Haltebasis der Halteeinrichtung anhand einer Schiebeelement-Lagerung gelagertes Schiebeelement mit einem im Kontakt mit dem Halteorgan während einer Vorschubbewegung translatorisch beweglichen Antriebsabschnitt, und eine einen manuellen Betätigungsbereich aufweisende Betätigungseinrichtung zum manuellen Betätigen des Schiebeelements aufweist.

Die Betätigungseinrichtung umfasst zum Beispiel ein Betätigungselement, insbesondere einen Betätigungsschieber oder einen Betätigungshebel. Das Schiebeelement ist zweckmäßigerweise ein von der Betätigungseinrichtung separates Bauteil.

Es ist ein Grundgedanke der vorliegenden Erfindung, dass das Schiebeelement im Bereich des Halteorgans eine translatorische Bewegung, d.h. eine Bewegung entlang einer im Wesentlichen geradlinig verlaufenden Bahn, durchläuft. Das Schiebeelement macht also eine Schiebebewegung.

Dadurch ist vorteilhaft ein großer Hub oder ein großer Verstellweg des Halteorgans relativ zur Halteeinrichtung bei der Vorschubbewegung anhand des Schiebeelements möglich. Somit kann anhand der Betätigungseinrichtung mit relativ wenigen Betätigungshandlungen, beispielsweise Schwenkbewegungen eines Betätigungselements der Betätigungseinrichtung, ein relativ großer Verstellweg des Halteorgans realisiert werden. So können beispielsweise 3-5 Zähne, insbesondere drei Zähne, der Zahnreihe mit einem Betätigungshub der Betätigungseinrichtung vorgefördert werden.

Die Haltebasis ist beispielsweise mit einer Führung zum Führen des Halteorgans ausgestattet. Zweckmäßigerweise hat die Haltebasis einen Führungskanal für das Halteorgan.

Bevorzugt ist es, wenn die Haltebasis das Halteorgan quer zur Verschiebeachse führt. Beispielsweise sind Führungsvorsprünge oder Führungskonturen quer zur Verschiebeachse vorgesehen. Insbesondere ist es vorteilhaft, wenn die Haltebasis das Halteorgan an dessen Schmalseiten führt.

Beispielsweise können an der Haltebasis in Richtung der Verschiebeachse Einführschrägen vorgesehen sein.

Das Halteorgan ist zweckmäßigerweise zumindest im Bereich der Zahnreihe als ein Riemen ausgestaltet und/oder weist eine Flachgestalt auf. Es versteht sich, dass das Halteorgan als Ganzes eine Flachgestalt aufweisen kann. Es ist auch möglich, dass das Halteorgan einen anderen Querschnitt als einen rechteckigen Querschnitt hat. So ist beispielsweise ein dreieckförmiger oder trapezförmiger Querschnitt eines Halteorgans durchaus möglich, wobei an einer Seite, insbesondere an einer Flachseite des Halteorgans, die Zahnreihe angeordnet ist. An dieser Stelle sei bemerkt, dass das Halteorgan nicht durchgängig eine Flachgestalt haben muss oder ein Riemen sein muss, sondern beispielsweise auch im Querschnitt runde oder polygonale Abschnitte aufweisen kann.

Das Halteorgan besteht zweckmäßigerweise zumindest abschnittsweise aus einem biegeflexiblen Kunststoff und/oder einem biegeflexiblen Metall und/oder aus Gummi. Mithin ist also auch ein Hybrid-Werkstoff möglich. Es können Schichten unterschiedlichen Materials aufeinandergeschichtet sein, um zumindest einen Teilabschnitt des Halteorgans auszubilden.

Die Haltebasis besteht zweckmäßigerweise aus Kunststoffmaterial und/oder Metall. Vorteilhaft ist die Haltebasis im Wesentlichen biegesteif oder vollständig biegesteif.

Es ist prinzipiell auch möglich, dass an anderer Stelle das Halteorgan nicht biegeflexibel ist und/oder eine andere Struktur und/oder eine andere Geometrie aufweist, beispielsweise im Querschnitt etwa kreisförmig oder elliptisch ist.

Die Zahnreihe erstreckt sich zweckmäßigerweise nur über einen Teilabschnitt des Halteorgans. Das Halteorgan kann aber auch über seine gesamte Länge oder über im Wesentlichen seine gesamte Länge eine Zahnreihe aufweisen.

Eine bevorzugte Ausführungsform der Erfindung sieht vor, dass das Schiebeelement zu einer oszillierenden Betätigung des Halteorgans ausgestaltet ist, wobei der Antriebsabschnitt des Schiebeelements zumindest im Eingriff mit dem Halteorgan, d.h. wenn der Antriebsabschnitt das Halteorgan tatsächlich betätigt, eine translatorische Vorschubbewegung entlang der Verschiebeachse durchläuft. Es ist möglich, dass der Antriebsabschnitt des Schiebeelements in der Rücklaufbewegung, also entgegengesetzt zu der Vorschubbewegung, ebenfalls translatorisch bewegbar ist. Es ist aber auch möglich, dass der Antriebsabschnitt des Schiebeelements bei der Rücklaufbewegung eine bogenförmige Bewegungsbahn durchläuft, d.h. also beispielsweise in Bögen oder einem Bogen, über das Halteorgan hinweg zurück bewegt wird. Die bogenförmige Bewegung kann auch sehr kleine Bogen-Radien haben. So ist es beispielsweise möglich, dass das Schiebeelement bei der Rücklaufbewegung an den Zähnen der Zahnreihe entlang rastet und jeweils bogenförmig über einen Zahn hinweg gleitet.

Vorteilhaft ist vorgesehen, dass die Betätigungseinrichtung einen an der Haltebasis anhand eines Hebel-Schwenklagers schwenkbar gelagerten Betätigungshebel aufweist, an dem das Schiebeelement anhand eines Schiebeelementschwenklagers und/oder in der Art eines Paddels schwenkbar gelagert ist. Somit schwenkt also der Betätigungshebel beispielsweise oszillierend hin und her, wobei das Schiebeelement-Schwenklager eine translatorische Bewegung des Antriebsabschnitts relativ zu dem Betätigungshebel ermöglicht.

Beispielsweise ist die Bewegung so ausgestaltet, dass die Schwenkachse des Schiebeelements an den Umkehrpunkten der Schwenkbewegung des Betätigungshebels an einander entgegengesetzten Seiten der Schwenkachse des Betätigungshebels ist.

Ergonomisch günstig und/oder platzsparend kann die nachfolgende Maßnahme sein: vorzugsweise ist vorgesehen, dass ein zum manuellen Betätigen vorgesehener Riegelelement-Betätigungsbereich, beispielsweise ein Betätigungsarm, Betätigungsvorsprung oder dergleichen, des Riegelelements in oder an einem Zwischenraum eines Betätigungselements der Betätigungseinrichtung für das Schiebeelement angeordnet ist. So kann zum Beispiel vorgesehen sein, dass ein schwenkbar an der Haltebasis gelagerter Bedienhebel einen derartigen Zwischenraum aufweist, in welchem oder an welchem der Riegelelement-Betätigungsbereich angeordnet ist.

Das Betätigungselement der Betätigungseinrichtung für das Schiebeelement kann vorteilhaft einen Riegelelement-Betätigungsbereich rahmenartig umgeben. Beispielsweise ist es vorteilhaft, wenn ein Betätigungsabschnitt des Betätigungselements für das Schiebeelement in Bezug auf die Verschiebeachse vor den Riegelelement-Betätigungsbereich vorsteht. Dieser Betätigungsabschnitt bildet vorteilhaft einen Schutz zur Vermeidung von Fehlbedienungen des Riegelelement-Betätigungsbereichs.

Zweckmäßigerweise hat das Betätigungselement der Betätigungseinrichtung im Bereich des Riegelelement-Betätigungsbereichs eine Mulde oder Vertiefung.

Eine Variante der Erfindung kann vorsehen, dass die Betätigungseinrichtung oder das Schiebeelement einerseits und andererseits das Riegelelement bewegungsgekoppelt sind. Wenn also beispielsweise die Betätigungseinrichtung im Sinne eines Vorschiebens des Halteorgans entlang der Verschiebeachse betätigt wird, kann es beispielsweise durch eine Betätigungskontur gleichzeitig das Riegelelement in die Entriegelungsstellung betätigen. Zweckmäßigerweise ist vorgesehen, dass das Halteorgan für die Vorschubbewegung durch das Schiebeelement und/oder die Betätigungseinrichtung entriegelbar ist.

Es ist auch möglich, dass das Schiebeelement und die Betätigungseinrichtung nicht bewegungsgekoppelt sind, insbesondere frei relativ zueinander beweglich sind. So kann vorzugsweise vorgesehen sein, dass das Riegelelement anhand der Riegelelement-Lagerung und das Schiebeelement anhand der Schiebeelement-Lagerung relativ zueinander und/oder unabhängig voneinander an der Haltebasis der Halteeinrichtung beweglich gelagert sind. Insbesondere sind das Schiebeelement und das Riegelelement relativ zueinander völlig frei beweglich.

Auch wenn das Schiebeelement und das Riegelelement bezüglich der Haltebasis unabhängig voneinander gelagert sind, d.h. dass die Schiebeelement-Lagerung und die Riegelelement-Lagerung voneinander separate Lagerungen sind, ist prinzipiell auch eine Bewegungskoppelung, insbesondere eine zumindest abschnittsweise Bewegungskopplung von Riegelelement und Schiebeelement, zum Beispiel im Sinne einer Entriegelung und/oder Verriegelung des Riegelelements durch das Schiebeelement oder dessen Betätigungseinrichtung, möglich. Es ist zum Beispiel möglich, dass das Riegelelement und das Schiebeelement relativ zueinander zwar beweglich sind, auf einem Bewegungsabschnitt von Riegelelement oder Schiebeelement jedoch das eine von Riegelelement oder Schiebeelement das andere von Riegelelement oder Schiebeelement mitnimmt, d.h. in diesem Bewegungsabschnitt eine Bewegungskoppelung vorhanden ist.

Vorteilhaft ist es, wenn das Riegelelement als Verriegelungshebel ausgestaltet ist oder einen Verriegelungshebel aufweist. Beispielsweise hat das Riegelelement einen Betätigungsarm zum Betätigen durch einen Bediener und einen Verriegelungsarm, an dessen freiem Endbereich die Formschlusskontur zum Eingriff in die Zahnreihe vorgesehen ist.

Es ist weiterhin vorteilhaft, wenn mindestens eine Federanordnung vorgesehen ist, beispielsweise um das Schiebeelement oder das Riegelelement zu belasten. Es ist möglich, dass sowohl das Schiebeelement als auch das Riegelelement durch eine Federanordnung in eine vorbestimmte Position belastet sind. Die Federanordnung kann beispielsweise eine Schenkelfeder, Schraubenfeder oder auch ein elastisches Gummielement, insbesondere einen Gummipuffer oder dergleichen, enthalten. Eine derartige Federanordnung kann dem Riegelelement oder dem Schiebeelement zugeordnet sein. Bei einer Schenkelfeder ist es vorteilhaft, wenn sie sich um eine Schwenkachse des jeweiligen Elements, des Schiebeelements oder des Riegelelements, erstreckt oder von der Schwenkachse durchsetzt ist.

Vorzugweise ist vorgesehen, dass das Schiebeelement in Richtung einer Außereingriffstellung mit dem Halteorgan durch eine Federanordnung federbelastet ist. So kann zum Beispiel vorgesehen sein, dass das Schiebeelement durch die Federanordnung, insbesondere eine Schraubenfeder oder eine Schenkelfeder, von dem Halteorgan, also insbesondere dessen Zahnreihe, weg federbelastet ist, sodass es beispielsweise ein Vorschieben relativ zu dem Riegelelement oder der Haltebasis nicht behindert, wenn der sozusagen schnelle Vorschub durch das Schiebeelement nicht gewünscht ist. Wenn das Riegelelement die Entriegelungsstellung einnimmt, kann das Halteorgan in diesem Fall relativ frei bezüglich der Haltebasis verstellt werden, ohne dass das Schiebeelement dabei hindert. Es ist aber auch möglich, dass das Schiebeelement im Sinne eines Haltens oder in Richtung einer Verriegelungsstellung federbelastet ist. So ist beispielsweise denkbar, dass das Schiebeelement durch eine Federanordnung, wiederum beispielsweise eine Schenkelfeder, eine Schraubenfeder oder dergleichen, in einen formschlüssigen Eingriff oder klemmenden Eingriff mit dem Halteorgan belastet ist. Somit kann das Schiebeelement beispielsweise eine zusätzlich zu dem Riegelelement das Halteorgan gegen ein Entfernen oder eine Relativbewegung zu der Haltebasis sichernde Einrichtung bilden.

Vorteilhaft ist es, wenn das Riegelelement durch eine Federanordnung in Richtung der Verriegelungsstellung belastet ist. Somit kann das Riegelelement beispielsweise automatisch Verrasten, ohne dass der Bediener etwas tun muss. In die Entriegelungsstellung hingegen ist eine Bedienerhandlung, beispielsweise ein Druck auf das Riegelelement im Sinne eines Lösens des Eingriffs in die Zahnreihe vorteilhaft.

Es ist vorteilhaft, wenn die Zahnreihe sägezahnartig ausgestaltete Zähne aufweist, welche Verdrängerschrägen oder Betätigungsschrägen zum Betätigen des Schiebeelements und/oder des Riegelelements im Sinne eines Entriegelns oder in Richtung einer Außereingriffstellung oder im Sinne von der Zahnreihe weg aufweist. Die Zähne sind also mit Schrägflächen oder Schrägkonturen ausgestaltet, die es zum Beispiel ermöglichen, das Halteorgan im Sinne eines Verkürzens zu der Halteeinrichtung hin zu bewegen. Die Schrägflächen oder Betätigungsschrägen verlaufen zweckmäßigerweise in einem Winkel von 30-60, insbesondere ca. 45° schräg zur Verschiebeachse V.

An den zu den Schrägflächen oder Betätigungsschrägen entgegengesetzten Seiten haben die Zähne vorzugsweise Stützflanken, an denen sich das Riegelelement oder das Schiebeelement abstützen können. Die Stützflanken sind vorzugsweise bezüglich der Verschiebeachse etwa rechtwinkelig. Es ist auch möglich, dass im Bereich der Stützflanken Eingreif-Vertiefungen, beispielsweise in der Art von Taschen, vorhanden sind, in die das Schiebeelement oder das Riegelelement eingreifen können.

Vorteilhaft ist vorgesehen, dass das Riegelelement eine Betätigungskontur zum Betätigen des Schiebeelements in einen formschlüssigen Eingriff oder klemmenden Eingriff mit dem Halteorgan aufweist. Somit kann das Riegelelement beispielsweise bei einer übermäßigen Belastung oder im Sinne einer zusätzlichen Sicherung das Schiebeelement in Richtung einer das Halteorgan bezüglich der Haltebasis fixierenden oder verriegelnden Stellung belasten.

Bevorzugt ist es, wenn das Riegelelement durch das Halteorgan betätigbar ist, dass es das Schiebeelement in einen formschlüssigen Eingriff oder klemmenden Eingriff mit dem Halteorgan betätigt.

Eine vorteilhafte Ausführungsform sieht eine Kraftverstärkung für eine Betätigungskraft eines Bedieners zum Betätigen der Betätigungseinrichtung vor. Zweckmäßigerweise ist vorgesehen, dass die Betätigungseinrichtung zur Kraftverstärkung einer Betätigungskraft eines Bedieners ein Kraftübertragungsgetriebe, beispielsweise eine Hebelanordnung oder ein Hebelgetriebe, zwischen einem Betätigungsbereich der Betätigungseinrichtung und dem Antriebsabschnitt des Schiebeelements aufweist. Das Kraftübertragungsgetriebe verstärkt beispielsweise eine Betätigungskraft des Bedieners bei der Betätigung des Antriebsabschnitts. So kann beispielsweise der bereits erwähnte Bedienhebel und/oder das Kraftübertragungsgetriebe im Sinne einer Kraftverstärkung wirken. An dieser Stelle sei bemerkt, dass selbstverständlich auch ein Bedien-Schieber oder ein Antriebsrad zum Antreiben des Schiebeelements vorgesehen sein kann. Als Kraftübertragungsgetriebe kommt aber auch ein Zahngetriebe oder Rädergetriebe oder Rollengetriebe infrage. Auch eine Seilanordnung oder Seilgetriebe oder ein Keilgetriebe ist ohne weiteres im Sinne einer Kraftübertragung und einer Kraftverstärkung einsetzbar.

Vorteilhaft ist weiterhin, wenn das Halteorgan in der Entriegelungsstellung des Riegelelements von der Halteeinrichtung lösbar entfernbar ist. Somit kann beispielsweise das Halteorgan von der Halteeinrichtung entfernt werden, um eine Last von dem Lastenträger zu entfernen.

Es ist aber auch möglich, dass das Halteorgan von der Halteeinrichtung unverlierbar gehalten wird, beispielsweise indem ein Längsanschlag am Halteorgan vorgesehen ist, der ein Entfernen des Halteorgans von der Halteeinrichtung verhindert. Der Längsanschlag schlägt beispielsweise an der Haltebasis der Halteeinrichtung in einer Längsendstellung des Halteorgans an. Somit kann über die Halteeinrichtung zwar die Länge des Halteorgans in Bezug auf die zu fixieren Last verändert werden, jedoch das Halteorgan nicht vollständig von der Halteeinrichtung entfernt werden.

Eine an sich eigenständige Erfindung stellt im Zusammenhang mit den Merkmalen des Oberbegriffs des Anspruchs 1 folgende Maßnahme dar. Diese Maßnahme kann aber auch eine vorteilhafte Weiterbildung der Erfindung sein. Es ist in beiden Fällen vorgesehen, dass die Befestigungsvorrichtung mindestens eine bezüglich der Verschiebeachse dem Riegelelement vorgelagerte oder nachgelagerte Führungseinrichtung für das Halteorgan mit einer Führungskontur aufweist, welche das Halteorgan bezüglich des Riegelelements bezüglich der Verschiebeachse verdrehsicher führt. Durch diese Führungseinrichtung wird das Halteorgan im Bereich des Riegelelements und/oder im Bereich des Schiebeelements in einer vorbestimmten Drehposition gehalten. Wenn also beispielsweise eine Kraft auf das Halteorgan quer zur Verschiebeachse und/oder eine Torsionskraft um die Verschiebeachse einwirkt, überträgt sich diese Kraft nicht auf das Riegelelement oder Schiebeelement, sondern wird von der Führungseinrichtung sozusagen aufgenommen oder abgefangen. Somit ist die Drehposition des Halteorgans entlang der Verschiebeachse im Bereich des Schiebeelement oder des Riegelelements oder beiden durch die Führungseinrichtung bzw. deren Führungskontur im Wesentlichen fest vorgegeben, so dass die Kraftwirkung von Schiebeelement oder Riegelelement auf das Halteorgan optimal ist. Ferner sind Rückwirkungen des Halteorgans auf Schiebeelement oder Riegelelement deutlich verringert oder vorzugsweise zumindest im Wesentlichen oder vollständig eliminiert.

Bevorzugt ist es, wenn die Führungseinrichtung das Halteorgan quer zu der Verschiebeachse führt. Beispielsweise kann vorgesehen sein, dass die Führungseinrichtung einen Führungskanal aufweist, dessen lichte Innenquerschnittskontur einer Außenquerschnittskontur des Halteorgans zumindest im Bereich von verdrehsichernden Abschnitten oder vollständig entspricht. Die Außenquerschnittskontur des Halteorgans ist zweckmäßigerweise eine Verdrehsicherungskontur oder weist eine Verdrehsicherungskontur auf. Beispielsweise ist die Außenquerschnittskontur polygonal. Die Innenquerschnittskontur der Führungseinrichtung oder des Führungskanals kann exakt der Außenquerschnittskontur des Halteorgans entsprechen. Es ist aber auch möglich, dass die Innenquerschnittskontur nur verdrehsicher führende und/oder geometrisch passende Abschnitte hat, beispielsweise in Eckbereichen der Außenquerschnittskontur des Halteorgans. Wenn beispielsweise das Halteorgan einen flachen, rechteckigen Querschnitt aufweist, ist der Innenquerschnitt oder die Innenquerschnittskontur der Führungseinrichtung, insbesondere des Führungskanals, ebenso flach-rechteckig. Dabei kann es ausreichen, dass nur der lichte Innenquerschnitt die flach-rechteckige Gestalt hat. Beispielsweise kann eine Führung nur an den Außeneckbereichen der Außenquerschnittskontur des Halteorgans vorgesehen sein. Selbstverständlich ist vorteilhaft die Querschnittsfläche der Innenkontur und der Außenkontur praktisch gleich. Allerdings ist ein gewisses Bewegungsspiel zwischen dem Halteorgan und der Führungskontur notwendig.

Bevorzugt ist es, wenn zwischen der Führungskontur und der Haltebasis ein Abstand vorhanden ist. Dieser Abstand kann zum Beispiel als Arbeitsbereich für das Schiebeelement dienen. Zweckmäßigerweise ist vorgesehen, dass das Schiebeelement zwischen dem Riegelelement und der Führungseinrichtung angeordnet ist bzw. dort seinen Arbeitsbereich hat.

Die Führungseinrichtung weist zweckmäßigerweise mindestens eine Führungsschräge zur Führung freier Endbereiche der Zähne der Zahnreihe auf. Die Führungsschräge ist zur Einwirkung auf freie Endbereiche der Zähne der Zahnreihe vorgesehen. Die freien Enden oder Spitzen der Zähne gleiten also unter der Führungsschräge hindurch. Die mindestens eine Führungsschräge wirkt beispielsweise so, dass sie das Halteorgan in Richtung eines Bodens der Führungseinrichtung und/oder der Haltebasis drückt oder führt. Dies trägt dazu bei, dass das Halteorgan flach am Boden entlang geführt ist.

Bevorzugt ist es, wenn die Führungseinrichtung einstückig an der Haltebasis angeformt ist. Beispielsweise hat die Haltebasis einen Führungsvorsprung, an der die Führungseinrichtung angeordnet ist.

Die Führungseinrichtung umfasst beispielsweise einen Tunnel oder einen Führungskanal zum Führen des Halteorgans.

Die Führungskontur der mindestens einen Führungseinrichtung kann eine umfangsseitig geschlossene Kontur darstellen oder sein. Es ist aber auch möglich, dass die Führungskontur eine Unterbrechung aufweist. Es ist beispielsweise möglich, dass die Führungskontur in der Art von zueinander winkeligen Schenkeln, d.h. beispielsweise U-förmig, jeweils Seitenflanken des Halteorgans führt.

Es ist möglich, dass die mindestens eine Führungseinrichtung sozusagen stromabwärts, d.h. in einer Richtung der Vorschubbewegung nach vorn der Haltebasis vorgelagert ist.

Vorteilhaft ist vorgesehen, dass ein freier Endbereich des Halteorgans durch die Führungseinrichtung geführt ist.

Es ist aber auch möglich, dass die mindestens eine Führungseinrichtung sozusagen an einer der Haltebasis vorgelagerten Seite angeordnet ist. So kann beispielsweise das Halteorgan durch die Führungseinrichtung eingangs der Halteeinrichtung geführt oder gehalten sein, so dass das Riegelelement optimal seine Verriegelungsfunktion leisten kann.

Natürlich ist es auch möglich, dass beidseits der Haltebasis bezüglich der Verschiebeachse jeweils eine Führungseinrichtung vorgesehen ist.

Bevorzugt hat die Führungseinrichtung eine biegeflexible Verbindung zu der Haltebasis. Dies ermöglicht es beispielsweise, dass sich die Führungseinrichtung und/oder die Haltebasis optimal an die zu fixierende Last quasi anschmiegen bzw. zum Umschlingen eine Krümmungslage einnehmen.

Es kann aber auch ein biegesteifer Verbindungsabschnitt zwischen der mindestens einen Führungseinrichtung und der Haltebasis vorgesehen sein. Dies ermöglicht beispielsweise einen optimalen Verlauf des Halteorgans zwischen der Führungseinrichtung und der Haltebasis, insbesondere den dort auf das Halteorgan einwirkenden Komponenten, nämlich Schiebeelement und/oder Riegelelement.

Eine zweckmäßige Ausgestaltung der Erfindung kann vorsehen, dass die Befestigungseinrichtung einen Bestandteil eines Lastenträgers, insbesondere eines Hecklastenträgers bildet. Der Lastenträger kann beispielsweise als Dach-Lastenträger zur Befestigung auf einem Fahrzeugdach eines Kraftfahrzeugs ausgestaltet sein. Der Hecklastenträger ist an einem Heck eines Kraftfahrzeugs, auch eines Elektrofahrzeugs, montierbar. Beispielsweise hat der Hecklastenträger eine Lastenträgerkupplung, mit der er an einer Anhängekupplung eines Kraftfahrzeugs befestigbar ist. Es ist aber auch möglich, dass am Heck des Kraftfahrzeugs mindestens eine Aufnahme oder Halterung zum Halten des Hecklastenträgers vorgesehen ist.

Vorteilhaft ist es auch, wenn das Halteorgan oder die Halteeinrichtung oder beide an einer Trägerbasis eines Lastenträgers oder eines sonstigen Tragbauteils eines Lastenträgers zum Tragen einer Last anhand von Befestigungsmitteln, beispielsweise eines Befestigungsbolzens, eines Niets oder dergleichen, festgelegt oder festlegbar ist. Beispielsweise hat die Halteeinrichtung und/oder das Halteorgan eine Durchstecköffnung zum Durchstecken eines derartigen Befestigungsmittels.

Ferner ist es möglich, dass das Halteorgan und/oder die Halteeinrichtung an einer Trägerrinne oder einem sonstigen Tragbauteil, welches beweglich an einer Trägerbasis des Lastenträgers angeordnet ist, befestigt sind.

Eine bereits bei der eingangs genannten Vorveröffentlichung genannte Variante der Erfindung sieht vor, dass das Halteorgan und die Halteeinrichtung, d.h. die voneinander lösbaren Komponenten der Befestigungsvorrichtung an einer Trägerbasis, insbesondere an einem Tragegestell, des Lastenträgers angeordnet sind. An dieser Trägerbasis ist ein Tragbauteil, beispielsweise eine Trägerinne zum Abstellen eines Fahrrads, beweglich gelagert, beispielsweise zwischen einer Gebrauchsstellung und einer Nichtgebrauchsstellung. Durch das Fixieren der Last, beispielsweise des Fahrrads, in Bezug auf das Tragbauteil wird das Tragbauteil selbst in Relativposition zu der Tragbasis ortsfest festgelegt. Beispielsweise können das Halteorgan und die Halteeinrichtung im Bereich eines Schwenklagers eines derartigen Tragbauteils an der Tragbasis, insbesondere dem Tragegestell, des Lastenträgers angeordnet sein.

Es ist zwar vorteilhaft, jedoch nicht zwingend notwendig, dass die Befestigungseinrichtung einen Bestandteil eines Lastenträgers bildet. Prinzipiell kann sie auch an anderer Stelle und zu anderen Zwecken vorteilhaft eingesetzt werden. Es ist weiterhin möglich, dass die Befestigungsvorrichtung als loses, sozusagen separates Bauteil ausgestaltet ist. So kann beispielsweise mit der Befestigungseinrichtung eine Last an einer beliebigen Stütze befestigt werden. Beispielsweise eignet sich die Befestigungseinrichtung dazu, eine Last mit einer Stütze, beispielsweise einem Stützrohr, zu verzurren.

Nachfolgend werden Ausführungsbeispiele der Erfindung anhand der Zeichnung erläutert. Es zeigen:

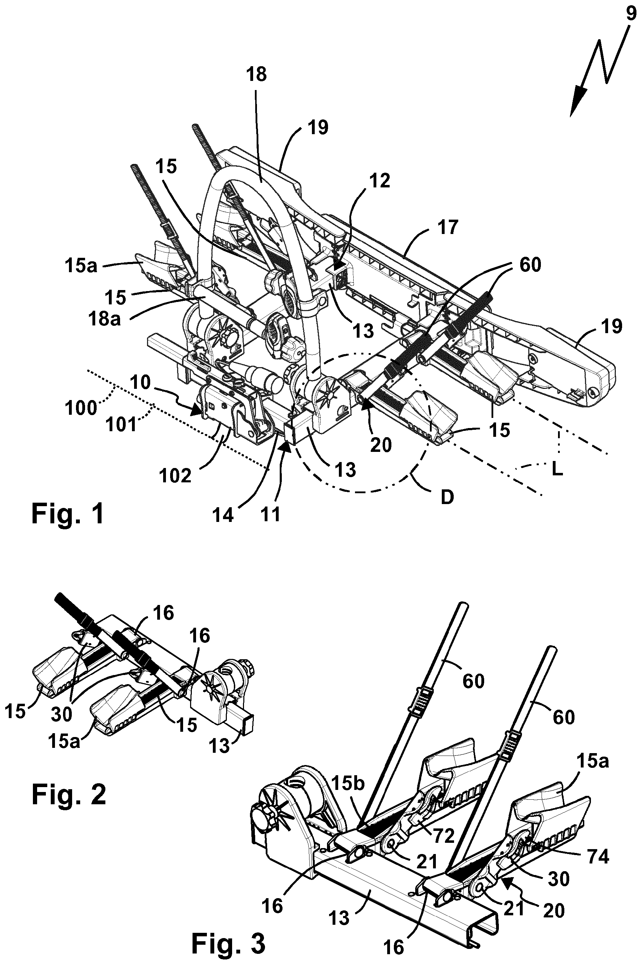

- Figur 1: eine perspektivische Schrägansicht eines Hecklastenträgers mit Befestigungsvorrichtungen,
- Figur 2: eine perspektivische Schrägansicht auf Tragkomponenten des Hecklastenträgers gemäß Figur 1 mit zugeordneten Befestigungsvorrichtungen,
- Figur 3: die Lagerkomponenten gemäß Figur 2, jedoch perspektivisch von der anderen Seite her dargestellt,

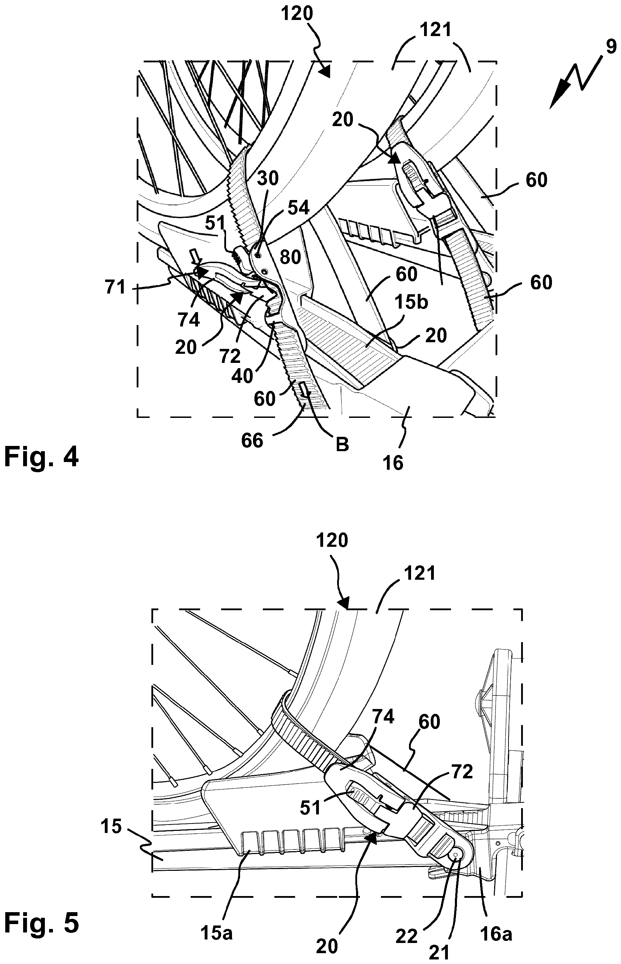

- Figur 4: eine perspektivische Schrägansicht auf ein Detail des Hecklastenträgers gemäß vorstehender Figuren sowie auf dem Hecklastenträger angeordnete Räder von Fahrrädern, etwa entsprechend einem Bereich D in Figur 1,
- Figur 5: das Detail gemäß Figur 4, jedoch frontal von der Seite,
- Figur 6: eine der Befestigungsvorrichtungen des Hecklastenträgers gemäß vorstehender Figuren perspektivisch schräg in der Verriegelungsstellung dargestellt,
- Figur 7: die Befestigungsvorrichtung gemäß Figur 6, jedoch mit in die Entriegelungsstellung verstellter Befestigungsvorrichtung,
- Figur 8: die Befestigungsvorrichtung gemäß Figuren 6, 7, jedoch während einer Vorschubbewegung durch ein Schiebeelement der Befestigungsvorrichtung,
- Figur 9: eine Schnittansicht der Befestigungsvorrichtung gemäß Figur 6, etwa entlang einer Schnittlinie A-A,
- Figur 10: einen Schnitt durch die Befestigungsvorrichtung in der Stellung gemäß Figur 7, ebenfalls entlang der Schnittlinie A-A,
- Figur 11: einen Schnitt durch die Befestigungsvorrichtung in der Stellung gemäß Figur 8, ebenfalls entlang der Schnittlinie A-A, und
- Figur 12: eine Darstellung der Befestigungsvorrichtung etwa entsprechend Figur 9, wobei die Befestigungsvorrichtung durch eine übermäßige Belastung des Halteorgans in eine Keilstellung verstellt ist.

Ein Lastenträger gemäß der Zeichnung ist beispielsweise als ein Hecklastenträger 9 ausgestaltet, der am Heck 101 eines Kraftfahrzeugs 100 lösbar befestigbar ist. Das Kraftfahrzeug 100, zum Beispiel ein Pkw, hat eine Anhängekupplung 102 oder eine sonstige Haltevorrichtung, an der der Hecklastenträger 9 lösbar befestigbar ist. Beispielsweise hat der Hecklastenträger 9 eine Lastenträgerkupplung 10 zur Befestigung an der Anhängekupplung 102. Die Lastenträgerkupplung 10 kann beispielsweise mit einem Kugelkopf, der in der Zeichnung nicht sichtbar ist, oder einem sonstigen Kuppelstück der Anhängekupplung 102 in klemmenden Eingriff gebracht werden, sodass der Hecklastenträger 9 am Heck 101 sicher befestigt ist. Bei Gebrauch steht also der Hecklastenträger 9 hinter das Heck 101 vor.

Eine Tragbasis 11 des Hecklastenträgers 9 dient zum Tragen einer Last, beispielsweise von Gepäck oder im konkreten Ausführungsbeispiel von Fahrrädern. Die Tragbasis 11 umfasst beispielsweise ein Tragegestell 12, welches an der Lastenträgerkupplung 10 befestigt ist. Das Tragegestell 12 hat Längsträger 13, die in Fahrzeuglängsrichtung im am Kraftfahrzeug 100 montierten Zustand des Hecklastenträgers 9 verlaufen. Die Längsträger 13 sind durch einen Querträger 14 miteinander verbunden, der seinerseits wiederum an der Lastenträgerkupplung 10 befestigt ist.

An den Längsträgern 13 sind Tragteile 15, beispielsweise Rinnen, angeordnet, auf denen eine Last, insbesondere Fahrräder, abgestellt werden können. Beispielsweise können die Tragteile 15 zwischen einer in der Zeichnung dargestellten Gebrauchsstellung, in der sie seitlich von den Längsträgern 13 abstehen, in eine Nichtgebrauchsstellung anhand von Schwenklagern 16 verstellt werden, in der die Tragteile 15 in einem Zwischenraum zwischen den Längsträgern 13 angeordnet sind. Dann braucht der Hecklastenträger 9 weniger Platz.

An den Tragteilen 15 sind Befestigungsvorrichtungen 20 zur Befestigung eines Fahrrads 120, insbesondere dessen Räder 121, vorgesehen.

Weiterhin kann die Last, insbesondere ein jeweiliges Fahrrad, anhand einer Stütze 18 gesichert werden. Die Stütze 18 umfasst beispielsweise einen Bügel, der winkelig von dem Tragegestell 12 in der Gebrauchsstellung absteht (in der Zeichnung so dargestellt), vorteilhaft aber auch noch in Richtung des Tragegestells 12, insbesondere der Längsträger 13, bei Nichtgebrauch verstellbar ist. An der Stütze 18 sind beispielsweise verstellbare Haltearme 18a zum Halten einer Last, insbesondere eines Fahrrads, vorgesehen.

Zwischen den Längsträgern 13 erstreckt sich dem Querträger 14 gegenüberliegend weiterhin ein Kennzeichenträger 17, der die Längsträger 13 verbindet. An dem Kennzeichenträger 17 sind Leuchten 19 zur Bereitstellung einer Heckbeleuchtung des Hecklastenträgers 9 angeordnet. Die Leuchten 19 können vorteilhaft anhand von nicht näher bezeichneten Schwenklagern zwischen einer etwa mit dem Kennzeichenträger 17 fluchtenden Gebrauchsstellung und einer zu den Längsträgern 13 hin verstellten Nichtgebrauchsstellung verschwenkt werden.

An den Tragteilen 15 sind weiterhin Stützen 15a zum Abstützen der Räder 121 der Fahrräder 120 vorgesehen. Die Stützen 15a sind an den Tragteilen 15 in Bezug auf deren Längsachse L längsverschieblich und in mindestens zwei Längspositionen bezüglich der Längsachse L an den Tragteilen 15 anhand einer Klemmeinrichtung oder Rasteinrichtung, die detailliert nicht sichtbar ist, verrastbar. Beispielsweise verrastet die Rasteinrichtung mit einer Zahnung 15b an den Tragteilen 15. Vorzugsweise ist vorgesehen, dass auch die Tragteile 15 relativ zum Tragegestell 12 oder der Tragbasis 11 in der Gebrauchsstellung ortsfest festlegbar sind, beispielsweise anhand von Halteeinrichtungen, insbesondere Rasteinrichtungen 16a.

Somit ist an sich schon ein guter Halt der Räder 121 eines Fahrrads 120 möglich. Eine bequeme Handhabung des Hecklastenträgers 9 und insbesondere auch eine Sicherheit im Falle einer übermäßigen Belastung, beispielsweise bei einem Unfall oder einer besonders starken Krafteinwirkung, ermöglichen die nachfolgend detailliert erläuterten Befestigungsvorrichtungen 20.

Die Befestigungsvorrichtungen 20 umfassen Halteeinrichtungen 30 und biegeflexible Halteorgane 60, welche anhand von Befestigungsmitteln 21 an der Tragbasis 11, vorliegend beispielsweise an den Tragteilen 15 befestigt sind. Selbstverständlich ist auch eine Festlegung einer jeweiligen Befestigungsvorrichtung 20 an anderer Stelle der Tragbasis 11, beispielsweise unmittelbar am Tragegestell 12, zum Beispiel den Längsträgern 13, möglich. Die Befestigungsmittel 21 umfassen beispielsweise Bolzen 22, mit denen die Halteorgane 60 und die Halteeinrichtungen 30 an den Tragteilen 15 befestigt sind. Die Bolzen 22 sind beispielsweise durch Durchstecköffnungen 31 der Halteeinrichtungen 30 und Durchstecköffnungen 61 der Halteorgane 60 durchgesteckt und mit den Tragteilen 15 verbunden.

Die Halteorgane 60 sind beispielsweise als Riemen 62 ausgestaltet, welche einen flach rechteckigen Querschnitt aufweisen. Die Halteorgane 60 weisen Abschnitte 63 ohne eine Verzahnung auf sowie Abschnitte 64 mit einer Zahnreihe 65. Anhand von Zähnen 66 der Zahnreihe 65 sind die Halteorgane 60 an den Halteeinrichtungen 30 formschlüssig festlegbar. Die Abschnitte 63 sind an ihren freien, von den Halteeinrichtungen 30 abgewandten Endbereichen oder den Halteeinrichtungen 30 nicht zugeordneten Endbereichen jeweils mit der Tragbasis 11, insbesondere den Tragteilen 15 verbunden. Dort befindet sich beispielsweise jeweils eine Durchstecköffnung 61.

Die Halteorgane 60 sind beispielsweise aus einem biegeflexiblen Kunststoffmaterial, welches um die Räder 121 herumgeschlungen und in die Halteeinrichtungen 30 eingeführt werden kann, um die Räder 121 bezüglich der Tragbasis 11 zu fixieren.

Die Halteeinrichtungen 30 umfassen eine Haltebasis 32. Die Haltebasis 32 hat beispielsweise einen insbesondere plattenförmigen Bodenkörper 33, welcher eine lang gestreckte Gestalt aufweist. Der Bodenkörper 33 umfasst einen Befestigungsabschnitt 34, der zur Befestigung an der Tragbasis 11 vorgesehen ist. Beispielsweise ist am Befestigungsabschnitt 34 die Durchstecköffnung 31 vorgesehen.

Von dem Bodenkörper 33 stehen Wandabschnitte 35 ab, zwischen denen ein Führungskanal 36 für das Halteorgan 60 gebildet ist. Die Wandabschnitte 35 stehen beispielsweise etwa rechtwinkelig von dem Bodenkörper 33 ab.

An den Wandabschnitten 35 sind Führungskörper 37 in einem Abstand zu einem Boden 38 des Führungskanals 36 angeordnet, die zum jeweils gegenüberliegenden Wandabschnitt 35 vorstehen. In dem Abstand zwischen den Führungskörpern 37, die beispielsweise als insbesondere kurze Führungsvorsprünge ausgestaltet sind, und dem Boden 38 des Führungskanals, insbesondere der Seitenwand des Bodenkörpers 33 zwischen den Wandabschnitten 35, ist das Halteorgan 60 geführt. Die Führungskörper 37 sorgen dafür, dass eine Seitenfläche 67 des Halteorgans 60 an dem Boden 38 des Führungskanals 36 entlang gleitet und nur mit geringem Spiel vom Boden 38 abheben kann. Somit ist auch ein Relativabstand der Zahnreihe 36 vom Boden 38 vorgegeben, was das später noch erläuterte Verriegelungskonzept und Vorschub-Konzept der Befestigungsvorrichtungen 20 verbessert.

Die Halteorgane 60 sind entlang einer Verschiebeachse V in die Halteeinrichtungen 30 bzw. die Führungskanäle 36 einführbar und in den Halteeinrichtungen 30 verschiebbar. Die Verschiebeachse V entspricht der Längserstreckung der Halteorgane 60 im Bereich der Halteeinrichtungen 30.

Zusätzlich zu der Führung anhand der Führungskörper 37 ist eine Führung anhand von Führungseinrichtungen 40 vorteilhaft vorhanden, die sozusagen stromabwärts des Halteorgans 60 den Wandabschnitten 35 oder den Führungskörpern 37 vorgelagert sind. Anhand der Führungseinrichtungen 40 ist zweckmäßigerweise ein freier, vor die Halteeinrichtungen 30 vorstehender Endbereich eines jeweiligen Halteorgans 60 geführt. Die Führungseinrichtungen 40 umfassen beispielsweise einen Führungskanal 41, dessen freie Innenquerschnittskontur 42 eine Führungskontur 43 zum Führen des Halteorgans 60 bereitstellt. Die Innenquerschnittskontur 42 entspricht einer Außenquerschnittskontur 68 des biegeflexiblen Halteorgans 60, sodass dieses verdrehsicher in Bezug auf die Innenquerschnittskontur 42 oder die Führungskontur 43 geführt ist. Dabei ist zu bemerken, dass die Innenquerschnittskontur 42 eine polygonale, insbesondere flach-rechteckige, Gestalt hat, die der polygonalen, insbesondere flach-rechteckigen, Außenquerschnittskontur 68 des Halteorgans 60 entspricht, sodass dieses zumindest im Bereich seiner Außenecken verdrehsicher geführt ist.

Der Führungskanal 41 wird an einer der Seitenfläche 67 oder Unterseite des Halteorgans 60 zugeordneten Bodenfläche 44 von dem Bodenkörper 33 begrenzt. Seitenflanken 69, insbesondere Schmalseiten, des Halteorgans 60, sind zwischen von dem Bodenkörper 33 abstehenden Seitenwänden 45 der Führungseinrichtung 40 geführt, nämlich an deren der Bodenfläche 44 zugewandten Innenseite. Die Seitenwände 45 oder Wandabschnitte stehen beispielsweise rechtwinkelig von dem Bodenkörper 33 ab.

Zwischen den Seitenwänden 45 erstreckt sich ein Führungskörper 46, der der Bodenfläche 44 gegenüberliegt. Der Führungskörper 46 könnte ohne weiteres auch eine Unterbrechung haben, d.h. dass beispielsweise von den Seitenwänden 45 jeweils ein Führungsarm entsprechend einem Teilabschnitt des Führungskörpers 46, zur anderen Seitenwand 45 hin absteht.

An seiner der Bodenfläche 44, also einer Führungsfläche, zugewandten Seite hat der Führungskörper 46 in Bezug auf die Verschiebeachse V beidseits jeweils eine Führungsschräge, nämlich eine Führungsschräge 47 und eine Führungsschräge 48. An den Führungsschrägen 47, 48 können die Zähne 46 entlang gleiten, wenn das Halteorgan 60 entlang der Verschiebeachse V bezüglich der Führungseinrichtung 40 und/oder Halteeinrichtung 30 verschoben wird. Die Führungsschrägen 47, 48 wirken einem Verhaken der Zähne 66 mit dem Führungskanal 41 entgegen. Die Führungsschrägen 47, 48 haben eine Schrägneigung in Richtung der Bodenfläche 44 hin, das heißt sie sorgen dafür, dass das Halteorgan 60 an der Bodenfläche 44 entlang gleitet und/oder leicht in den Führungskanal 41 einführbar ist.

An den Wandabschnitten 35, mithin also an der Haltebasis 32, ist ein Riegelelement 51 einer Verriegelungseinrichtung 50 zwischen einer Verriegelungsstellung R und einer Entriegelungsstellung E beweglich gelagert. Beispielsweise umfasst das Riegelelement 51 einen Verriegelungshebel 52, welcher mit einer Formschlusskontur 53 in die Zähne 36 bzw. Zwischenräume zwischen den Zähnen 36 eingreift, wenn er die Verriegelungsstellung R einnimmt.

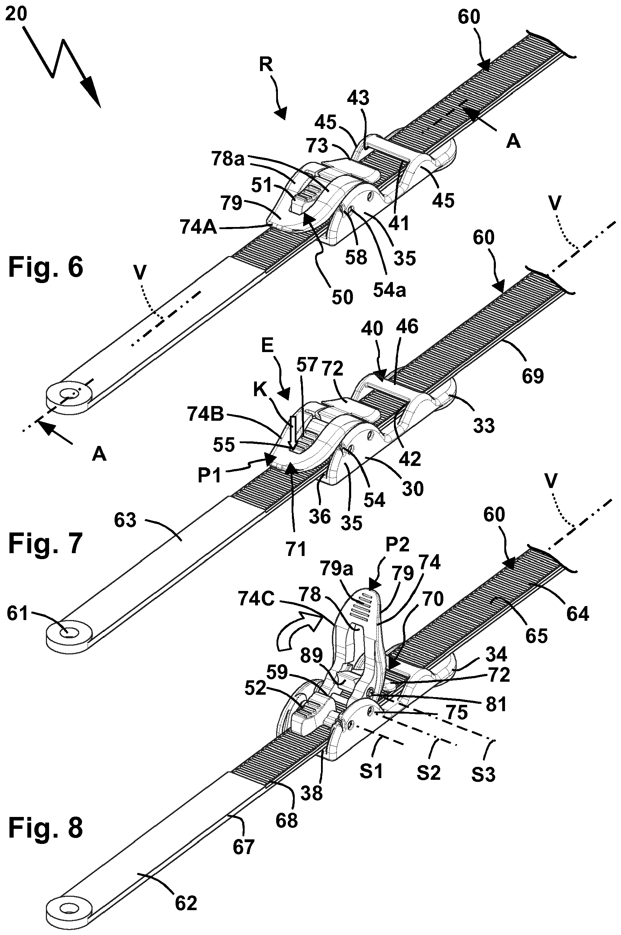

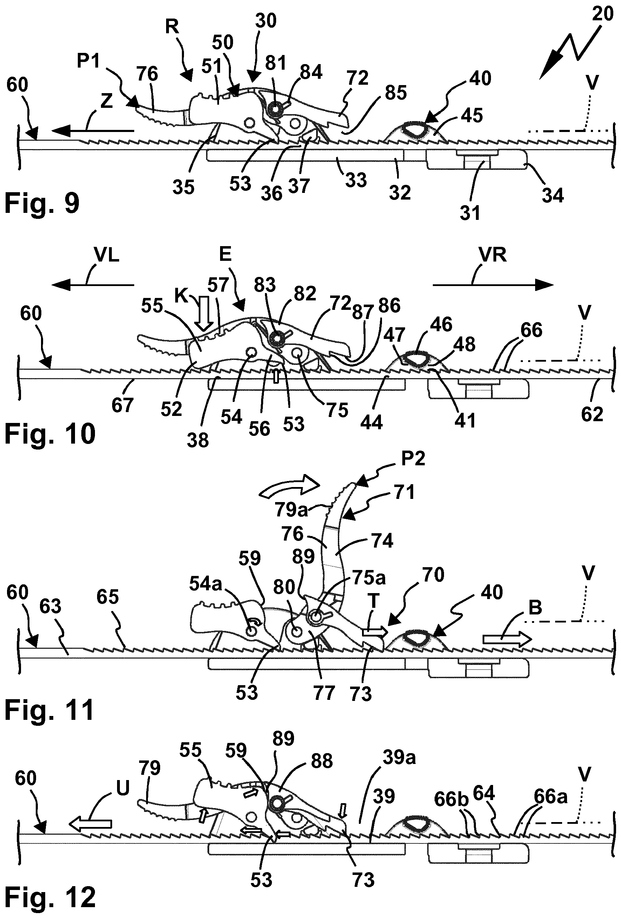

Das Riegelelement 51 ist beispielsweise anhand eines Achselements 54a, welches sich zwischen den Wandabschnitten 35 erstreckt, eines Riegelelement-Lagers 54 um eine Schwenkachse S1 schwenkbar an der Haltebasis 32 gelagert. Das Riegelelement 51 hat beispielsweise einen Betätigungsarm 55, der zum Betätigen durch einen Bediener einen Riegelelement-Betätigungsbereich 57 aufweist, sowie einen Haltearm 56, an dessen freiem Endbereich die Formschlusskontur 53, beispielsweise in der Art eines Haltezahns oder einer Haltenase angeordnet ist. Durch eine Betätigungskraft K, zum Beispiel einen Druck, auf den Riegelelement-Betätigungsbereich 57 wird die Formschlusskontur 53 außer Eingriff mit der Verzahnung oder Zahnreihe 65 gebracht, sodass das Halteorgan 60 entlang der Verschiebeachse V verschiebbar ist (Figuren 10 und 7).

Entgegen der Entriegelungsrichtung, d.h. in Richtung der Verriegelungsstellung R, wirkt eine Federanordnung 58, beispielsweise eine Schenkelfeder, welche sich einerseits an der Haltebasis 32 und andererseits am Riegelelement 51 abstützt. Die Abstützung der Federanordnung 58 ist beispielsweise in den perspektivischen Schrägansichten gemäß Figuren 6-8 erkennbar.

Für einen schnellen Vorschub des Halteorgans 60 entlang der Verschiebeachse V in Bezug auf die Halteeinrichtung 30 dient eine Vorschubeinrichtung 70, die eine Betätigungseinrichtung 71 zum Betätigen eines Schiebeelements 72 aufweist.

Das Schiebeelement 72 hat einen Antriebsabschnitt 73, welcher zum reibschlüssigen oder vorliegend formschlüssigen Betätigen und Antreiben des Halteorgans 60 dient.

Die Betätigungseinrichtung 71 umfasst einen Betätigungshebel 74 zum Betätigen des Schiebeelements 72. Der Betätigungshebel 74 ist durch einen Bediener ergreifbar und manuell betätigbar. Der Betätigungshebels 74 bildet beispielsweise einen Bestandteil eines Kraftübertragungsgetriebes 74A, insbesondere einer Hebelanordnung 74B oder eines Hebelgetriebes 74C.

Der Betätigungshebel 74 ist anhand eines Hebel-Schwenklagers 75 an der Haltebasis 32 schwenkbar um eine Schwenkachse S2 gelagert. Beispielsweise erstreckt sich ein Achselement 75a zwischen den Wandabschnitten 35. Der Betätigungshebel 74 weist vorzugsweise einen Betätigungsarm 76 und einen Antriebsarm 77 auf, zwischen denen die Schwenkachse S2 verläuft. Der Betätigungsarm 76 ist länger als der Antriebsarm 72, sodass eine Kraftverstärkung möglich ist.

Der Betätigungsarm 76 des Betätigungshebels 74 steht weiter vor die Haltebasis 32 vor als der Betätigungsarm 55 des Riegelelements 51, was einen gewissen Schutz gegen eine Fehlbetätigung des Riegelelements 51 darstellt.

Weiterhin ist vorteilhaft vorgesehen, dass der Riegelelement-Betätigungsbereich 57 und somit im Wesentlichen der Betätigungsarm 55 des Verriegelungshebel 52 in einem Zwischenraum 78 des Betätigungsarms 76 des Betätigungshebels 74 angeordnet ist. Der Betätigungsarm 55 des Riegelelements 51 steht in der Verriegelungsstellung R an der von dem Halteorgan 60 abgewandten Seite vor den Betätigungsarm 76 des Betätigungshebels 74 vor, sodass er von einem Benutzer mit der Kraft K in Richtung zum Betätigungshebel 74 hin gedrückt werden kann, um die Verriegelungseinrichtung 50 zu entriegeln bzw. in die Entriegelungsstellung E zu betätigen. Der Zwischenraum 78 ist beispielsweise zwischen Armen 78a des Betätigungshebels 74 vorgesehen.

Vorzugsweise ist im Bereich des Zwischenraums 78 eine Griffmulde oder Betätigungsmulde vorgesehen.

An einem Betätigungsbereich 79 ist zweckmäßigerweise eine Riffelung oder eine sonstige ein Ergreifen bzw. ein Betätigen des Betätigungshebels 74 erleichternde Strukturierung 79a angeordnet.

Das Schiebeelement 72 ist anhand eines Schiebeelement-Schwenklagers 81 einer Schiebeelement-Lagerung 80 an dem Betätigungshebel 74 schwenkbar um eine Schwenkachse S3 gelagert. Das Schiebeelement-Schwenklager 81 befindet sich am Antriebsarm 77 des Betätigungshebels 74.

Ein Lagerabschnitt 82 des Schiebeelements 72 ist zwischen den Armen 78a des Betätigungsarms 76 oder des Betätigungshebels 74 angeordnet. Dort befindet sich auch das Schiebeelement-Schwenklager 81. Beispielsweise verläuft ein Achselement 83 des Schwenklagers 81 zwischen den Armen 78a des Betätigungshebels 74.

Eine Federanordnung 84 belastet das Schiebeelement 72 in einem Sinne von dem Halteorgan 60 weg. Die Federanordnung 84 umfasst beispielsweise eine Schenkelfeder, die vom Achselement 83 durchsetzt ist. Auf diesem Wege ist beispielsweise in einer Ausgangslage P1 des Betätigungshebels 74 (Figuren 6 und 9) ein Abstand 85 zwischen dem Halteorgan 60 und dem Antriebsabschnitt 73 des Schiebeelements 72 vorhanden. Die Federanordnung 84 wirkt im Sinne eines Herstellens dieses Abstands 85.

Aus der Zusammenschau der Figuren 7 und 8 bzw. 10 und 11 ist erkennbar, dass der Betätigungshebel 74 ausgehend von der Ausgangslage P1 (Figuren 7, 10) bei der der Betätigungsarm 76 zum Halteorgan 60, insbesondere dessen Abschnitt 63, hin verstellt ist, in eine Vorschubposition P2 um die Schwenkachse S2 schwenkbar ist, bei der er von der Haltebasis 32, insbesondere deren Bodenkörper 33, winkelig absteht. Der Schwenkweg zwischen diesen beiden Schwenk-Endpositionen des Betätigungshebels 74 beträgt beispielsweise etwa 80-120°, insbesondere ca. 110°.

Durch diese Schwenkbewegung des Betätigungshebels 74 ist eine Vorschubbewegung B des Halteorgans 60 erzielbar. Die Schiebeelement-Lagerung 80, die das Schiebeelement-Schwenklager 81 sowie das Hebel-Schwenklager 75 umfasst, ermöglicht dabei eine translatorische Bewegung T des Antriebsabschnitts 73 des Schiebeelements 72. Wenn der Betätigungshebels 74 um die Schwenkachse S2 schwenkt, schwenkt die Schwenkachse S3 zwischen einer Position zwischen den Schwenkachsen S1 und S2 in eine Position außerhalb eines Abstands zwischen den Schwenkachsen S1 und S2. Das Schwenklager 81 schwenkt in einem Bogen um das Schwenklager 75.

Das Schiebeelement 72 bewegt sich dabei erkennbar beispielsweise aus der Zusammenschau der Figuren 10 und 11 in der Art eines Schiebers oder Schiebe-Paddels in der Vorschubrichtung B nach vorn. Der freie von der Schwenkachse S3 abgewandte oder entfernte Abschnitt des Schiebeelements 72 greift in die Zahnreihe 65 formschlüssig ein, um auf diese Weise das Halteorgan 60 entlang der Verschiebeachse V nach vorn zu schieben. Diese Vorschubbewegung B ist äußerst effektiv und schnell, da nämlich beispielsweise durch die Schwenkbewegung des Betätigungshebels 74 zwischen den beiden Schwenk-Endpositionen P1 und P2 das Halteorgan 60 über eine Länge von mindestens drei der Zähne 66 relativ zur Haltebasis 32 vorgeschoben wird.

Die Zähne 66 haben eine sägezahnartige Gestalt und Verdrängerschrägen 66a, an denen die Formschlusskontur 53 und/oder Formschlusskonturen 87, 86 des Antriebsabschnitts 73 des Schiebeelements 72 in einer Vorschubrichtung VR des Halteorgans 60 entlang gleiten können.

Somit kann also beispielsweise das Halteorgan 60 in der Vorschubrichtung VR geschoben werden, wobei das Riegelelement 51 durch die Verdrängerschrägen 66a der Zähne 66 in seine Entriegelungsstellung E betätigt wird und/oder das Schiebeelement 72 außer Eingriff mit dem Halteorgan 60 gebracht wird.

Auch für eine Rücklaufbewegung des Schiebeelements 72 in einer Rücklaufrichtung VL, entgegengesetzt zu der Vorschubrichtung VR, sind die Verdrängerschrägen 66a vorteilhaft, da nämlich die Formschlusskonturen 87, 86 des Schiebeelements 72 an diesen entlang gleiten können, wenn der Betätigungshebel 74 von der Position P2 in die Position P1 zurück verschwenkt wird und dabei das Schiebeelement 72 zu einer Rücklaufbewegung relativ zum Halteorgan 60 mitnimmt. Dabei ist es möglich, dass auch bei dieser Rücklaufbewegung der Antriebsabschnitt 73 translatorisch, also etwa in Richtung der Verschiebeachse V bewegt wird. Es ist aber auch möglich, dass der Antriebsabschnitt 73 zumindest über einen Teilabschnitt der Rücklaufbewegung um die Schwenkachse S2 schwenkt.

Wenn der Antriebsabschnitt 73 des Schiebeelements 73 jedoch in der Vorschubrichtung VR bewegt wird, greift er formschlüssig zwischen jeweils zwei der Zähne 66, um das Halteorgan 60 in der Vorschubrichtung VR aktiv vorzuschieben. Beispielsweise greifen die Formschlusskonturen 87, 86 an Stützflanken 66b der Zähne 66 an.

Die Stützflanken 66b stützen sich bei einer Kraftbeaufschlagung des Halteorgans 60 entgegen der Vorschubrichtung VR an der Formschlusskontur 53 des Riegelelements 51 ab, sodass das Halteorgan 60 entgegen einer auf das Halteorgan 60 entlang der Verschiebeachse V wirkenden Zugkraft Z an der Halteeinrichtung 30 abgestützt ist.

Die Stützflanken 66b verlaufen vorzugsweise etwa rechtwinkelig zur Verschiebeachse V.

Die Verdrängerschrägen 66a verlaufen zweckmäßigerweise schräg zur Verschiebeachse V, insbesondere in einem Winkelbereich von ca. 30-60°, besonders bevorzugt etwa 45°.

Bei einer übermäßigen Kraftbelastung, zum Beispiel im Falle eines Unfalls, wird eine starke Betätigungskraft U (Figur 12), insbesondere entlang der Verschiebeachse V oder in einem flachen Winkel von ca. 15-30° zu der Verschiebeachse V, auf das Betätigungsorgan 60 ausgeübt, weil nämlich die Last bzw. das Fahrrad 20 entsprechend stark am Halteorgan 60 zieht.

Diese Betätigungskraft U wirkt über die Formschlusskontur 53 auf das Riegelelement 51 ein und schwenkt den Verriegelungshebel 72 oder das Riegelelement 51 sozusagen unter der Schwenkachse S1 hindurch oder um die Schwenkachse S1 herum, wobei der Betätigungsarm 55 über seine der Entriegelungsstellung E zugeordnete Position hinaus nach oben vom Bodenkörper 33 weg schwenkt. Dadurch gelangt eine Betätigungskontur 59 in Eingriff mit einer Betätigungskontur 89 an einem Betätigungsarm 88 des Schiebeelements 72. Der Betätigungsarm 88 steht vor die Schwenkachse S3 vor, so dass die Betätigungskontur 89 oder der Betätigungsarm 55 des Riegelelements 51 das Schiebeelement 72 um die Schwenkachse S3 in eine Verriegelungsposition oder Klemmposition schwenkt, bei der die Formschlusskonturen 86, 87 in formschlüssigen, zweckmäßigerweise sogar klemmenden Eingriff mit der Zahnreihe 65 gelangen. Somit ist ein doppelter Schutz bzw. eine besonders effektive Verriegelung und Verklemmung des Halteorgans 60 relativ zur Halteeinrichtung 30 gerade dann möglich, wenn das Halteorgan 60 besonders stark belastet ist. In diesem Fall, beispielsweise bei einem Unfall, sorgt also nicht nur das Riegelelement 51, sondern zusätzlich auch das Schiebeelement 72 für einen zuverlässigen Halt des Halteorgans 60 an der Halteeinrichtung 30.

Zwischen der Verriegelungseinrichtung 50 und der Vorschubeinrichtung 70 einerseits und der Führungseinrichtung 40 erstreckt sich ein Verbindungsabschnitt 39 der Haltebasis 32. Dort ist ein Abstand 39a zwischen der Führungseinrichtung 40 und den anderen Komponenten der Halteeinrichtung 30 vorgesehen, welcher als Arbeitsraum oder Vorschubraum für das Schiebeelement 72 dient.

Der Abschnitt 39 ist zweckmäßigerweise biegesteif oder im Wesentlichen biegesteif. Somit sind die Führungseinrichtung 40 und die Verriegelungseinrichtung 50 und die Vorschubeinrichtung 70 relativ zueinander verdrehsicher gehalten, sodass die Führung für das Halteorgan 60, die die Führungseinrichtung 40 bereitstellt, dass Halteorgan 60 auch in Bezug auf die Verriegelungseinrichtung 50 und/oder die Vorschubeinrichtung 70 optimal positioniert. Wenn also beispielsweise eine Kraft auf das Halteorgan 60 quer zur Verschiebeachse V und/oder eine Torsionskraft um die Verschiebeachse V, beispielsweise im Sinne von dem Boden 38 weg, wirkt, wird diese Kraft von der Führungseinrichtung 40 sozusagen abgefangen oder abgestützt. Somit kann das Halteorgan 60 nicht quer zur Verschiebeachse V oder im Sinne einer Torsion um die Verschiebeachse V auf beispielsweise das Riegelelement 51 und/oder das Schiebeelement 72 rückwirken und somit den Eingriff dieser Elemente in die Zahnreihe 65 lösen.

Im Sinne der Erfindung ist es also, wenn die Führungseinrichtung 40 oder eine andere erfindungsgemäße Führungseinrichtung das jeweilige Halteorgan, zum Beispiel das Halteorgan 60, bezüglich Verschiebeachse, hier der Verschiebeachse V, verdrehsicher führt, so dass das Halteorgan in allen nicht der Verschiebeachse V entsprechenden Richtungen nicht auf die Verschiebeeinrichtung und/oder Verriegelungseinrichtung zurück wirkt.

## Patentansprüche

1. Befestigungsvorrichtung zur Befestigung einer Last an einem Lastenträger eines Kraftfahrzeugs, wobei die Befestigungsvorrichtung (20) zum Umschlingen der Last ein zumindest abschnittsweise biegeflexibles Halteorgan (60) mit einer Zahnreihe (65) und eine Halteeinrichtung (30) zum zugfesten Halten des Halteorgans (60) bezüglich einer Vorschubachse aufweist, wobei an einer Haltebasis (32) der Halteeinrichtung (30) ein Riegelelement (51) anhand eines Riegelelement-Lagers (54) zwischen einer Verriegelungsstellung (R) und einer Entriegelungsstellung (E) beweglich gelagert ist, wobei das Riegelelement (51) in der Verriegelungsstellung (R) zum Verriegeln des Halteorgans (60) bezüglich der Halteeinrichtung (30) mit einer Formschlusskontur (53) formschlüssig in die Zahnreihe (65) eingreift und in der Entriegelungsstellung (E) außer Eingriff mit der Zahnreihe (65) ist, wobei in der Entriegelungsstellung (E) das Halteorgan (60) bezüglich der Halteeinrichtung (30) entlang der Verschiebeachse (V) verschieblich ist, **dadurch gekennzeichnet, dass** sie zum Vorschieben des Halteorgans (60) entlang der Verschiebeachse (V) ein an der Haltebasis (32) der Halteeinrichtung (30) anhand einer Schiebeelement-Lagerung (80) gelagertes Schiebeelement (72) mit einem im Kontakt mit dem Halteorgan (60) während einer Vorschubbewegung (B) translatorisch beweglichen Antriebsabschnitt (73), und eine einen manuellen Betätigungsbereich (79) aufweisende Betätigungseinrichtung (71) zum manuellen Betätigen des Schiebeelements (72) aufweist.

2. Befestigungsvorrichtung (20) nach Anspruch 1, **dadurch gekennzeichnet, dass** das Schiebeelement (72) zu einer oszillierenden Betätigung des Halteorgans (60) ausgestaltet ist, wobei der Antriebsabschnitt (73) des Schiebeelements (72) zumindest im Eingriff mit dem Halteorgan (60) eine translatorische Vorschubbewegung (B) entlang der Verschiebeachse (V) durchläuft.

3. Befestigungsvorrichtung nach Anspruch 1 oder 2, **dadurch gekennzeichnet, dass** die Betätigungseinrichtung (71) einen an der Haltebasis (32) anhand eines Hebel-Schwenklagers (75) schwenkbar gelagerten Betätigungshebel (74) aufweist, an dem das Schiebeelement (72) anhand eines Schiebeelement-Schwenklagers (81) und/oder in der Art eines Paddels schwenkbar gelagert ist.

4. Befestigungsvorrichtung nach einem der vorhergehenden Ansprüche, **dadurch gekennzeichnet, dass** ein zum manuellen Betätigen vorgesehener Riegelelement-Betätigungsbereich (57), insbesondere ein Betätigungsarm des Riegelelements (51) in oder an einem Zwischenraum eines Betätigungselements der Betätigungseinrichtung (71) für das Schiebeelement (72) angeordnet ist.

5. Befestigungsvorrichtung nach einem der vorhergehenden Ansprüche, **dadurch gekennzeichnet, dass** das Schiebeelement (72) anhand der Schiebeelement-Lagerung (80) und das Riegelelement (51) anhand der Riegelelement-Lagerung (54) relativ zueinander und/oder unabhängig voneinander an der Haltebasis (32) der Halteeinrichtung (30) beweglich gelagert sind und/oder dass das Schiebeelement (72) und das Riegelelement (51) bewegungsgekoppelt sind und/oder dass das Schiebeelement (72) in Richtung einer von dem Halteorgan (60) entfernten Außereingriffstellung oder in Richtung einer Eingriffstellung mit dem Halteorgan (60) durch eine Federanordnung (84) federbelastet ist.

6. Befestigungsvorrichtung nach einem der vorhergehenden Ansprüche, **dadurch gekennzeichnet, dass** das Riegelelement (51) durch eine Federanordnung (58) in Richtung der Verriegelungsstellung (R) belastet ist.

7. Befestigungsvorrichtung nach einem der vorhergehenden Ansprüche, **dadurch gekennzeichnet, dass** die Zahnreihe (65) sägezahnartig ausgestaltete Zähne (66) aufweist, welche Betätigungsschrägen zum Betätigen des Schiebeelements (72) und/oder des Riegelelements (51) im Sinne von der Zahnreihe (65) weg oder in Richtung einer Außereingriffstellung aufweist.

8. Befestigungsvorrichtung nach einem der vorhergehenden Ansprüche, **dadurch gekennzeichnet, dass** das Riegelelement (51) eine Betätigungskontur (59) zum Betätigen des Schiebeelements (72) in einen formschlüssigen Eingriff oder klemmenden Eingriff mit dem Halteorgan (60) aufweist und/oder dass das Riegelelement (51) durch das Halteorgan (60) in eine das Schiebeelement (72) in einen formschlüssigen Eingriff oder klemmenden Eingriff mit dem Halteorgan (60) haltende Stellung betätigbar ist.

9. Befestigungsvorrichtung nach einem der vorhergehenden Ansprüche, **dadurch gekennzeichnet, dass** die Betätigungseinrichtung (71) zur Kraftverstärkung einer Betätigungskraft eines Bedieners ein Kraftübertragungsgetriebe (74A), insbesondere eine Hebelanordnung (74B) oder ein Hebelgetriebe (74C), zwischen einem Betätigungsbereich (79) der Betätigungseinrichtung (71) und dem Antriebsabschnitt (73) des Schiebeelements (72) aufweist.

10. Befestigungsvorrichtung nach einem der vorhergehenden Ansprüche, **dadurch gekennzeichnet, dass** das Halteorgan (60) in der Entriegelungsstellung (E) des Riegelelements (51) von der Halteeinrichtung (30) lösbar entfernbar ist.

11. Befestigungsvorrichtung nach einem der vorhergehenden Ansprüche, **dadurch gekennzeichnet, dass** sie mindestens eine bezüglich der Verschiebeachse (V) dem Riegelelement (51) vorgelagerte oder nachgelagerte Führungseinrichtung (40) für das Halteorgan (60) mit einer Führungskontur (43) aufweist, welche das Halteorgan (60) bezüglich des Riegelelements (51) bezüglich der Verschiebeachse (V) verdrehsicher führt.

12. Befestigungsvorrichtung nach Anspruch 11, **dadurch gekennzeichnet, dass** die mindestens eine Führungseinrichtung (40) das Halteorgan (60) quer zu der Verschiebeachse (V) führt und/oder einen Führungskanal (41) aufweist, dessen Innenquerschnittskontur (42) einer Außenquerschnittskontur (68) des Halteorgans (60) entspricht, und/oder dass die mindestens eine Führungseinrichtung (40) mindestens eine schräg zur Verschiebeachse (V) verlaufende Führungsschräge (47, 48), insbesondere zur Einwirkung auf freie Endbereiche der Zähne (66) der Zahnreihe (65) oder zur Führung der freien Endbereiche, aufweist, und/oder dass zwischen der Führungskontur (43) und der Haltebasis (32) ein, insbesondere ein als Arbeitsbereich für das Schiebeelement (72) dienender Abstand (39a) angeordnet ist und/oder dass die mindestens eine Führungseinrichtung (40) einstückig mit der Haltebasis (32) ist und/oder dass zwischen der mindestens einen Führungseinrichtung (40) und der Haltebasis (32) ein biegeflexibler oder biegesteifer Verbindungsabschnitt (39) zur Verbindung der Führungseinrichtung (40) und der Haltebasis (32) vorgesehen ist.

13. Befestigungsvorrichtung nach einem der vorhergehenden Ansprüche, **dadurch gekennzeichnet, dass** das Halteorgan (60) zumindest im Bereich der Zahnreihe (65) als ein Riemen (62) ausgestaltet ist und/oder eine Flachgestalt aufweist und/oder dass die Befestigungseinrichtung einen Bestandteil eines Lastenträgers, insbesondere eines Hecklastenträgers, bildet.

14. Befestigungsvorrichtung nach einem der vorhergehenden Ansprüche, **dadurch gekennzeichnet, dass** das Halteorgan (60) und/oder die Halteeinrichtung (30) an einem Tragbauteil eines Lastenträgers anhand von Befestigungsmitteln, insbesondere einem Befestigungsbolzen, festgelegt oder festlegbar ist.

15. Lastenträger, insbesondere Hecklastenträger für ein Kraftfahrzeug, mit mindestens einer Befestigungsvorrichtung (20) nach einem der vorhergehenden Ansprüche.

## Claims

1. Fastening device for attaching a load to a load carrier of a motor vehicle, wherein the fastening device (20) has for wrapping around the load a holding member (60), flexible in bending at least in sections, with a row of teeth (65) and a holding fixture (30) for tension-resistant holding of the holding member (60) relative to an advance axis wherein, on a holding base (32) of the holding fixture (30) a locking element (51) is movably mounted with the aid of a locking element bearing (54) between a locking position (R) and an unlocking position (E), wherein the locking element (51) in the locking position (R) for locking the holding member (60) relative to the holding fixture (30) engages positively in the row of teeth (65) with an interlocking contour (53), and in the unlocking position (E) is disengaged from the row of teeth (65), wherein in the unlocking position (E) the holding member (60) may be displaced relative to the holding fixture (30) along the displacement axis (V), **characterised in that** it has, for advancing the holding member (60) along the displacement axis (V), a sliding element (72) mounted on the holding base (32) of the holding fixture (30) with the aid of a sliding element bearing (80), with a driving section (73) movable in translation and in contact with the holding member (60) during an advance movement (B), and an actuating device (71) with a manual actuating section (79) for manual actuation of the sliding element (72).

2. Fastening device (20) according to claim 1, **characterised in that** the sliding element (72) is designed for oscillating actuation of the holding member (60), wherein the driving section (73) of the sliding element (72) runs through a translational advance movement (B) along the displacement axis (V), at least in engagement with the holding member (60).

3. Fastening device according to claim 1 or 2, **characterised in that** the actuating device (71) has an actuating lever (74), pivotably mounted on the holding base (32) with the aid of a lever pivot bearing (75), and on which the sliding element (72) is pivotably mounted with the aid of a sliding element pivot bearing (81) and/or in the manner of a paddle.

4. Fastening device according to any of the preceding claims, **characterised in that** a locking element actuating section (57), in particular an actuating arm of the locking element (51), provided for manual actuation, is located in or at an intermediate space of an actuating element of the actuating device (71) for the sliding element (72).

5. Fastening device according to any of the preceding claims, **characterised in that** the sliding element (72) with the aid of the sliding element bearing (80), and the locking element (51) with the aid of the locking element bearing (54), are movably mounted relative to one another or independently of one another on the holding base (32) of the holding fixture (30), and/or that the sliding element (72) and the locking element (51) are movement-coupled, and/or that the sliding element (72) is spring-loaded by a spring assembly (84) in the direction of a disengaged position removed from the holding member (60) or in the direction of an engaged position with the holding member (60).

6. Fastening device according to any of the preceding claims, **characterised in that** the locking element (51) is biased by a spring assembly (58) in the direction of the locking position (R).

7. Fastening device according to any of the preceding claims, **characterised in that** the row of teeth (65) has teeth (66) with a saw-tooth design, which have actuating bevels for actuating the sliding element (72) and/or the locking element (51) away from the row of teeth (65) or towards a disengaged position.

8. Fastening device according to any of the preceding claims, **characterised in that** the locking element (51) has an actuating contour (59) for actuating the sliding element (72) into a form-fitting engagement or clamping engagement with the holding member (60), and/or that the locking element (51) may be actuated by the holding member (60) into a position holding the sliding element (72) in form-fitting engagement or clamping engagement with the holding member (60).

9. Fastening device according to any of the preceding claims, **characterised in that** the actuating device (71) has, for force reinforcement of an actuating force of a user, a force transmission mechanism (74A), in particular a lever arrangement (74B) or a lever mechanism (74C), between an actuating section (79) of the actuating device (71) and the driving section (73) of the sliding element (72).

10. Fastening device according to any of the preceding claims, **characterised in that** the holding member (60) is releasably removable from the holding fixture (30) in the unlocking position (E) of the locking element (51).

11. Fastening device according to any of the preceding claims, **characterised in that** it has at least one guiding device (40) for the holding member (60), upstream or downstream of the locking element (51) with regard to the displacement axis (V), and with a guide contour (43) which guides the holding member (60) non-rotatably relative to the locking element (51) and with regard to the displacement axis (V).

12. Fastening device according to claim 11, **characterised in that** the guiding device or devices (40) guides or guide the holding member (60) transversely to the displacement axis (V), and/or has or have a guide channel (41), the inside cross-sectional contour (42) of which corresponds to the outside cross-sectional contour (68) of the holding member (60), and/or that the guiding device or devices (40) has or have at least one guide bevel (47, 48) running at an angle to the displacement axis (V), in particular to act on free end sections of the teeth (66) of the row of teeth (65) or to guide the free end sections, and/or that there is provided between the guide contour (43) and the holding base (32) a gap (39a), in particular serving as working area for the sliding element (72), and/or that the guiding device or devices (40) is or are integral with the holding base (32), and/or that there is provided between the guiding device or devices (40) a connecting section (39), flexible in bending or flexurally stiff, for connecting the guiding device (40) and the holding base (32).

13. Fastening device according to any of the preceding claims, **characterised in that** the holding member (60), at least in the area of the row of teeth (65), is in the form of a belt (62) and/or has a flat shape and/or that the fastening device forms part of a load carrier, in particular a rear load carrier.

14. Fastening device according to any of the preceding claims, **characterised in that** the holding member (60) and/or the holding fixture (30) is or may be fixed to a carrier part of a load carrier with the aid of fixing means, in particular a mounting bolt.

15. Load carrier, in particular rear load carrier for a motor vehicle, with at least one fastening device (20) according to any of the preceding claims.

## Revendications

1. Dispositif de fixation destiné à fixer une charge à un porte-charge d'un véhicule automobile, dans lequel le dispositif de fixation (20) présente, pour entourer la charge, un organe de retenue (60) au moins en partie flexible avec une rangée de dents (65), et un dispositif de retenue (30) destiné à retenir de manière résistante à la traction l'organe de retenue (60) par rapport à un axe d'avance, dans lequel un élément de verrouillage (51) est monté à l'aide d'un palier d'élément de verrouillage (54) sur une base de retenue (32) du dispositif de retenue (30) de manière mobile entre une position de verrouillage (R) et une position de déverrouillage (E), dans lequel l'élément de verrouillage (51), dans la position de verrouillage (R), vient en prise par coopération de formes avec la rangée de dents (65) avec un contour de coopération de formes (53) pour verrouiller l'organe de retenue (60) par rapport au dispositif de retenue (30), et, dans la position de déverrouillage (E), est retiré de la rangée de dents (65), dans lequel, dans la position de déverrouillage (E), l'organe de retenue (60) est déplaçable par rapport au dispositif de retenue (30) le long de l'axe de déplacement (V), **caractérisé en ce que**, pour avancer l'organe de retenue (60) le long de l'axe de déplacement (V), il présente un élément de déplacement (72), monté sur la base de retenue (32) du dispositif de retenue (30) à l'aide d'un support d'élément de déplacement (80), avec une partie d'entraînement (73) mobile en translation en contact avec l'organe de retenue (60) pendant un mouvement d'avance (B), et un dispositif d'actionnement (71) présentant une zone d'actionnement manuel (79) pour l'actionnement manuel de l'élément de déplacement (72).

2. Dispositif de fixation (20) selon la revendication 1, **caractérisé en ce que** l'élément de déplacement (72) est conçu pour un actionnement oscillant de l'organe de retenue (60), dans lequel la partie d'entraînement (73) de l'élément de déplacement (72) au moins en prise avec l'organe de retenue (60) effectue un mouvement d'avance (B) en translation le long de l'axe de déplacement (V).

3. Dispositif de fixation selon la revendication 1 ou 2, **caractérisé en ce que** le dispositif d'actionnement (71) présente un levier d'actionnement (74), monté de manière à pouvoir pivoter sur la base de retenue (32) à l'aide d'un palier pivotant de levier (75), sur lequel l'élément de déplacement (72) est monté de manière à pouvoir pivoter à l'aide d'un palier pivotant d'élément de déplacement (81) et/ou à la façon d'une palette.

4. Dispositif de fixation selon l'une quelconque des revendications précédentes, **caractérisé en ce qu'**une zone d'actionnement d'élément de verrouillage (57) prévue pour l'actionnement manuel, en particulier un bras d'actionnement de l'élément de verrouillage (51), est disposée dans ou au niveau d'un espace intermédiaire d'un élément d'actionnement du dispositif d'actionnement (71) pour l'élément de déplacement (72).

5. Dispositif de fixation selon l'une quelconque des revendications précédentes, **caractérisé en ce que** l'élément de déplacement (72), à l'aide du support d'élément de déplacement (80), et l'élément de verrouillage (51), à l'aide du support d'élément de verrouillage (54), sont montés mobiles l'un par rapport à l'autre et/ou indépendamment l'un de l'autre sur la base de retenue (32) du dispositif de retenue (30) et/ou que l'élément de déplacement (72) et l'élément de verrouillage (51) sont accouplés en mouvement et/ou que l'élément de déplacement (72) est sollicité par un ressort par un ensemble ressort (84) en direction d'une position de retrait éloignée de l'organe de retenue (60) ou en direction d'une position de mise en prise avec l'organe de retenue (60).

6. Dispositif de fixation selon l'une quelconque des revendications précédentes, **caractérisé en ce que** l'élément de verrouillage (51) est sollicité par un ensemble ressort (58) en direction de la position de verrouillage (R).

7. Dispositif de fixation selon l'une quelconque des revendications précédentes, **caractérisé en ce que** la rangée de dents (65) présente des dents (66) conçues à la façon de dents de scie, lesquelles présentent des chanfreins d'actionnement destinés à actionner l'élément de déplacement (72) et/ou l'élément de verrouillage (51) aux fins d'éloignement de la rangée de dents (65) ou en direction d'une position de retrait.

8. Dispositif de fixation selon l'une quelconque des revendications précédentes, **caractérisé en ce que** l'élément de verrouillage (51) présente un contour d'actionnement (59) destiné à actionner l'élément de déplacement (72) dans une mise en prise par coopération de formes ou mise en prise par serrage avec l'organe de retenue (60) et/ou que l'élément de verrouillage (51) peut être actionné par l'organe de retenue (60) dans une position retenant l'élément de déplacement (72) dans une mise en prise par coopération de formes ou mise en prise par serrage avec l'organe de retenue (60).

9. Dispositif de fixation selon l'une quelconque des revendications précédentes, **caractérisé en ce que** le dispositif d'actionnement (71) présente, pour l'amplification de force d'une force d'actionnement d'un utilisateur, un mécanisme de transmission de force (74A), en particulier un ensemble de leviers (74B) ou un mécanisme à leviers (74C), entre une zone d'actionnement (79) du dispositif d'actionnement (71) et la partie d'entraînement (73) de l'élément de déplacement (72).

10. Dispositif de fixation selon l'une quelconque des revendications précédentes, **caractérisé en ce que** l'organe de retenue (60), dans la position de déverrouillage (E) de l'élément de verrouillage (51), peut être retiré de manière détachable du dispositif de retenue (30).

11. Dispositif de fixation selon l'une quelconque des revendications précédentes, **caractérisé en ce qu'**il présente au moins un dispositif de guidage (40), monté en amont ou en aval de l'élément de verrouillage (51) par rapport à l'axe de déplacement (V) pour l'organe de retenue (60) avec un contour de guidage (43), lequel guide l'organe de retenue (60) par rapport à l'élément de verrouillage (51) par rapport à l'axe de déplacement (V).

12. Dispositif de fixation selon la revendication 11, **caractérisé en ce que** l'au moins un dispositif de guidage (40) guide l'organe de retenue (60) transversalement à l'axe de déplacement (V) et/ou présente un canal de guidage (41), dont le contour de section transversale intérieure (42) correspond à un contour de section transversale extérieure (68) de l'organe de retenue (60), et/ou que l'au moins un dispositif de guidage (40) présente au moins un chanfrein de guidage (47, 48) s'étendant de manière oblique par rapport à l'axe de déplacement (V), en particulier pour agir sur des zones d'extrémité libres des dents (66) de la rangée de dents (65) ou pour guider les zones d'extrémité libres, et/ou qu'un écart (39a), en particulier un servant de zone de travail pour l'élément de déplacement (72), est disposé entre le contour de guidage (43) et la base de retenue (32) et/ou que l'au moins un dispositif de guidage (40) est d'une seule pièce avec la base de retenue (32) et/ou qu'une partie de liaison (39) flexible ou rigide en flexion, destinée à relier le dispositif de guidage (40) et la base de retenue (32), est prévue entre l'au moins un dispositif de guidage (40) et la base de retenue (32).

13. Dispositif de fixation selon l'une quelconque des revendications précédentes, **caractérisé en ce que** l'organe de retenue (60) est conçu au moins dans la zone de la rangée de dents (65) comme une courroie (62) et/ou présente une forme plate et/ou que le dispositif de fixation forme un élément constitutif d'un porte-charge, en particulier d'un porte-charge arrière.

14. Dispositif de fixation selon l'une quelconque des revendications précédentes, **caractérisé en ce que** l'organe de retenue (60) et/ou le dispositif de retenue (30) est fixé ou peut être fixé à un élément porteur d'un porte-charge à l'aide de moyens de fixation, en particulier d'un boulon de fixation.

15. Porte-charge, en particulier porte-charge arrière pour un véhicule automobile, avec au moins un dispositif de fixation (20) selon l'une quelconque des revendications précédentes.
